# EUROPÄISCHE PATENTSCHRIFT

(11) **EP 2 717 105 B1**
(45) Veröffentlichungstag und Bekanntmachung des Hinweises auf die Patenterteilung: **12.06.2019**
(21) Anmeldenummer: 13004710.3
(22) Anmeldetag: 27.09.2013
(51) Int. Cl.: G05B 15/02, A47B 96/00, A47B 88/457

(54) **Vorrichtung zur Kontrolle eines Möbels**
Device for controlling an item of furniture
Dispositif de contrôle d'un meuble

(30) Priorität: 08.10.2012 DE 202012009566 U
(43) Veröffentlichungstag der Anmeldung: 09.04.2014
(73) Patentinhaber: Grass GmbH, 6973 Höchst (AT)
(72) Erfinder: Erdel, Tobias, 71069 Sindelfingen (DE)
(74) Vertreter: Otten, Roth, Dobler & Partner mbB Patentanwälte

(56) Entgegenhaltungen:
- WO-A1-2005/079630
- AT-A1- 509 808
- DE-A1- 19 751 329
- DE-U1-202006 006 189
- US-A1- 2009 012 634
- US-A1- 2010 231 421

## Beschreibung

Die Erfindung betrifft eine Vorrichtung zur Kontrolle eines Möbels nach dem Oberbegriff des Anspruchs 1 sowie ein Möbel nach Anspruch 28.

Aus dem Stand der Technik sind Vorrichtungen zur Kontrolle von Möbeln in verschiedensten Ausführungen bekannt, insbesondere solche, die zur Steuerung oder Regelung von Bewegungen bewegbarer Möbelteile vorgesehen sind. Häufig ist eine entsprechende Kontrollvorrichtungen als elektronische Kontrolleinheit im Möbel eingebaut und mit Aktoren und Sensoren verbunden, um beispielsweise eine Schublade elektrisch angetrieben ein- und ausfahren zu können. Durch elektrische Betätigung und Antrieb können aufwändige mechanische Betätigungsmittel und Getriebe oft platzsparend und bedienfreundlich ersetzt werden. Betätigungselemente dienen dabei nur noch dem Auslösen eines elektrischen Signals, wofür eine vergleichsweise kleine Schaltkraft bzw. ein kleiner Schalthub ausreichen. Daraus ergibt sich eine größere Gestaltungsfreiheit, Betätigungselemente an ein vorgegebenes Möbeldesign anzupassen.

Dabei werden Kontrollmittel häufig auf ein jeweiliges Möbelteil abgestimmt, wodurch sich in der Herstellung vergleichsweise hohe Aufwände ergeben. Dennoch lässt es sich dadurch nicht vermeiden, dass am Aufstellungsort ein Möbel für eine Benutzung zusätzlich angepasst werden muss oder dass Benutzer des Möbels Einschränkungen beim Gebrauch, z.B. durch einen verkürzten Öffnungsweg, beachten müssen. Dabei kann durch die Aufstellung nicht nur der Gebrauch des Möbels selbst, sondern auch die Verwendung von Einrichtungsgegenständen in der Umgebung des Möbels durch dessen Aufstellung eingeschränkt sein. Das Dokument US2010231421 offenbart eine Handfernbedienung zur Steuerung von z.B. einer verstellbaren Betteneinrichtung. Sie verfügt über einen Empfänger, der Daten empfängt, die auf eine neue Einstellung der Einrichtung hinweisen.

Die Aufgabe der vorliegenden Erfindung besteht darin, eine Vorrichtung zur Kontrolle eines Möbels bereitzustellen, die eine Abstimmung und Nutzung eines Möbels erleichtert.

Erfindungsgemäß wird diese Aufgabe mit einer Vorrichtung zur Kontrolle eines Möbels mit den Merkmalen des Anspruchs 1 gelöst.

Bevorzugte und vorteilhafte Ausführungen der Erfindung sind in den abhängigen Ansprüchen 2 bis 28 aufgeführt.

Die Erfindung geht von einer Vorrichtung zur Kontrolle eines Möbels aus, die eine Kontrolleinheit und Anschlussmittel, mit denen Aktoren und Sensoren für eine Signalübertragung an die Kontrolleinheit anschließbar sind, umfassen. Die Kontrolleinheit ist dazu ausgebildet, ein oder mehrere Parameter des Möbels zu kontrollieren.

Der Kern der Erfindung besteht darin, dass die Anschlussmittel ein Anschlusselement umfassen, mit dem eine Raumeinrichtung, die sich unabhängig und beliebig entfernt vom Möbel anordnen lässt, für eine Signalübermittlung anschließbar ist, und dass die Kontrolleinheit eine Kontrollfunktion aufweist, mit der ein Kontrollorgan der Raumeinrichtung kontrollierbar ist, wobei das Möbel und die Raumeinrichtung unabhängig voneinander kontrollierbar sind.

Die Kontrolleinheit kann mindestens eine Kontrollfunktion aufweisen, mit der oder denen gegebenenfalls mehrere, insbesondere alle Kontrollorgane der Raumeinrichtung kontrollierbar sind. Des Weiteren können die Anschlussmittel mehrere, gegebenenfalls unterschiedliche Anschlusselemente aufweisen, mit denen mehrere Raumeinrichtungen für eine Signalübermittlung anschließbar sind.

Vorzugsweise ist das Anschlusselement für eine Signalübermittlung ausgebildet, mit der Informationen als digitale Daten insbesondere bidirektional übertragbar sind. Dadurch ist vorteilhaft eine schnelle und zuverlässige Signalübertragung an ein oder mehrere Raumeinrichtungen möglich, insbesondere auch dann, wenn sich die Raumeinrichtungen vom Möbel weiter entfernt befinden.

Die Raumeinrichtung und das Möbel können über zwei getrennte Anschlusselemente mit der Kontrolleinheit verbunden sein. Des Weiteren können die Raumeinrichtung und das Möbel über ein gemeinsames Anschlusselement anschließbar sein.

Die Raumeinrichtung ist vorzugsweise mit einem Sensor zur Überwachung eines Zustands oder wenigstens einer Zustandsgröße des Kontrollorgans ausgestattet. Außerdem kann die Raumeinrichtung mit einem Aktor zur Änderung des Zustands des Kontrollorgans ausgestattet sein. Über das Anschlusselement können ein Sensor oder ein Aktor der Raumeinrichtung direkt mit der Kontrolleinheit verbunden sein. Die Raumeinrichtung kann allerdings auch eine z.B. Elektronikeinheit aufweisen, die zum direkten Anschluss an das Anschlusselement vorgesehen ist und gegebenenfalls eine Verarbeitung an Signalen bzw. Daten von Sensoren und Aktoren vornimmt, die zur Übertragung von und zum Anschlusselement vorgesehen sind. Dementsprechend kann am Anschlusselement die Raumeinrichtung mit einer entsprechenden Elektronikeinheit als Kombination von Sensoren und Aktoren anschließbar sein. Dabei kann z.B. das Anschlusselement dazu ausgebildet sein, Signale verschiedener Sensoren und Aktoren als getrennte Daten mit der Kontrolleinheit auszutauschen.

Vorzugsweise ist die Kontrolleinheit in der Lage, die Aktoren und Sensoren für eine Bewegungskontrolle eines bewegbaren Möbelteils des Möbels zu kontrollieren. Dadurch kann vorteilhaft auf Mittel zur Bewegungskontrolle z.B. unmittelbar an einem Aktor oder z.B. am bewegbaren Möbelteil verzichtet werden.

Ein Vorteil der erfindungsgemäßen Vorrichtung besteht darin, dass deren Kontrolleinheit nicht nur zur Kontrolle des Möbels vorgesehen ist, sondern auch Raumeinrichtungen in einer Umgebung des Möbels, z.B. im selben Zimmer, anschließbar und kontrollierbar sind. Die Kontrolleinheit ist dadurch grundsätzlich dazu ausgebildet eine Protokollierung der Stellungen und Bewegungen von bewegbaren Möbelteilen der angeschlossenen Möbel möglich. Dadurch lassen sich vorteilhaft Zustandsänderungen des Kontrollorgans auf Änderungen von Parametern des Möbels abstimmen und umgekehrt, wodurch sich für Benutzer eine verbesserte Nutzbarkeit und Sicherheit beim Gebrauch des Möbels und der Raumeinrichtung ergeben kann.

Die erfindungsgemäße Vorrichtung bietet zudem den Vorteil, dass Funktionen zur Steuerung oder Regelung des Parameters des Möbels und des Kontrollorgans der Raumeinrichtung zentral in der Kontrolleinheit ausführbar sind. Somit sind keine einzelnen Kontrolleinrichtungen für jeden Parameter und jedes Kontrollorgan erforderlich, wodurch vorteilhaft Bauteile eingespart bzw. günstigere Bauteile eingesetzt werden können. Beispielsweise ist dadurch auch die oben beschriebene Elektronikeinheit der Raumeinrichtung entbehrlich und die entsprechenden Aktoren und Sensoren können direkt an den Anschlussmitteln angeschlossen werden. Sensoren und Aktoren, die jeweils dem Parameter oder dem Kontrollorgan zugewiesen sind, lassen sich auf Aufgaben einer Signalübertragung und einer entsprechenden Erfassung oder Einstellung von Größen beschränken. Dadurch können sie vergleichsweise einfach, zuverlässig und kostengünstig aufgebaut sein.

Die erfindungsgemäße Vorrichtung ist nicht auf einen bestimmten Möbeltyp beschränkt und ist vorteilhaft für jedes Möbel mit ein oder mehreren einstellbaren Elementen einsetzbar. Das Möbel kann z.B. ein Schrank mit z.B. einer Türe oder z.B. ein Bett mit z.B. einer Schublade sein. Ebenso kann das Möbel z.B. ein Tisch mit z.B. ausziehbaren Vergrößerungselementen sein.

Mit einer von der erfindungsgemäßen Vorrichtung ausführbaren Kontrolle ist in diesem Zusammenhang eine Steuerung oder eine Regelung oder eine Kombination aus Steuerung und Regelung gemeint. Die Kontrolleinheit kann eine Elektronikeinheit, insbesondere eine elektronische Rechnereinheit sein, die vorzugsweise einen z.B. Mikroprozessor enthält. Die Kontrolleinheit kann mehrere Untereinheiten umfassen, die zum Beispiel für vorgegebene Funktionsbereiche wie beispielsweise Kommunikationsanschlüsse und zum Beispiel zur Bewegungskoordination und Kollisionsvermeidung bewegbarer Möbelteile und Kontrollorgane von Raumeinrichtungen ausgebildet ist.

Unter Parameter eines Möbels ist eine beliebige Eigenschaft eines einstellbaren Möbelelements, insbesondere eines bewegbaren Möbelelements eines Möbels zu verstehen. Dabei kann das Möbel ein oder mehrere Parameter aufweisen. Parameter können z.B. die Eigenschaften mehrerer Schubladen einer Kommode sein. Beispielsweise ist eine Eigenschaft wie zum Beispiel einer Türe eines Schranks Position, Geschwindigkeit, etc. Des Weiteren kann der Parameter den Zustand z.B. eines Beleuchtungselements in oder an dem Möbel widerspiegeln.

Der Parameter kann eine oder mehrere Größen aufweisen. Der Sensor ist zur Bestimmung des Werts einer Größe vorgesehen. Der Aktor ist zur Änderungen des Werts einer Größe vorgesehen. Dabei kann ein Sensor in einem Aktor, z.B. in einem Elektromotor, integriert sein, wodurch Aktor und Sensor vorteilhaft über eine gemeinsame Schnittstelle der Anschlussmittel an die Kontrolleinheit anschließbar sind. Die Größen können beispielsweise im Fall einer Schublade deren momentane Stellung, deren Verriegelungszustand, deren Geschwindigkeit, deren Beschleunigung und auf die Schublade wirkende Kräfte sein.

Eine Raumeinrichtung kann ein beliebiges Element in einer Umgebung des Möbels sein. Als Beispiele für eine Raumeinrichtung lassen sich unter anderem eine Zimmertüre, eine Lampe, ein Fenster, ein Klimagerät und ein Heizkörper aufführen. Ein zweites oder weiteres Möbel lässt sich vorteilhafterweise über die Kontrolleinheit wie ein erstes Möbel kontrollieren. Die Raumeinrichtung kann auch ein Möbel sein.

Mit Kontrollorgan ist hierbei ein Organ der Raumeinrichtung gemeint, das mehrere verschiedene Zustände einnehmen kann und das kontrollierbar ist. Für eine Kontrolle des Kontrollorgans ist die Raumeinrichtung und insbesondere das Kontrollorgan vorzugsweise mit z.B. Sensoren und z.B. Aktoren ausgestattet. Weitere Beispiele für Kontrollorgane können z.B. ein Kühlaggregat und z.B. ein Ventilator eines Klimagerätes sein. Die Raumeinrichtung kann unter anderem ein Fenster sein, wobei z.B. ein schwenkbarer Fensterflügel mit einem Kontrollorgan gekuppelt sein kann.

Die Anschlussmittel für Aktoren und Sensoren, mit denen ein oder mehrere Parameter des Möbels kontrollierbar sind, können verschiedenartig ausgebildet sein. Insbesondere wenn die Kontrollvorrichtung ganz oder teilweise im Möbel untergebracht ist, kann beispielsweise für jeden Aktor oder Sensor oder jedes kombinierte Aktor-Sensor-System des Möbelteils jeweils eine einzelne Anschlussschnittstelle vorhanden sein. Um einen Verkabelungsaufwand am bzw. im Möbel gering zu halten, ist vorzugsweise eine Vielzahl von Aktoren und Sensoren an eine einzelne Anschlussschnittstelle der Anschlussmittel anschließbar. Vorzugsweise ist eine solche Anschlussschnittstelle als elektronische Busschnittstelle z.B. für ein digitales Busprotokoll ausgebildet. Aktoren und Sensoren zur Kontrolle von einem oder mehreren Parametern des Möbels können jedoch auch mittels einer insbesondere kurzreichweitigen Funkschnittstelle, z.B. ZigBee oder Z-Wave angeschlossen sein, wodurch sich eine Verlegung von Kabeln verringern oder ganz vermeiden lässt.

Die Anschlussmittel können ein einziges Anschlusselement oder mehrere Anschlusselemente umfassen, um ein oder mehrere Raumeinrichtungen zum Austausch von Signalen mit der Kontrolleinheit anzuschließen. Das Anschlusselement kann zum Anschluss eines einzelnen Sensors oder Aktors ausgebildet sein. Des Weiteren kann das Anschlusselement zum Anschluss von Gruppen von Sensoren und Aktoren, die z.B. zu einer Raumeinrichtungen gehören, ausgebildet sein. Zur Begrenzung des Verbindungsaufwands ist es bevorzugt, dass an das Anschlusselement eine Vielzahl von Raumeinrichtungen bzw. von deren Aktoren und Sensoren anschließbar ist.

Des Weiteren ist es bevorzugt, wenn die Anschlussmittel eine Anschlusseinheit für ein Kommunikationsnetzwerk umfassen. Dadurch ist die erfindungsgemäße Vorrichtung mit einem Kommunikationsgerät, wie z.B. einem Personal Computer oder z.B. einem Mobiltelefon, zugänglich und kann beispielsweise auf diese Weise konfiguriert werden. Die Erfindung kann dabei z.B. mehrere Anschlusseinheiten für z.B. verschiedene Kommunikationsnetzwerke aufweisen. Dadurch lassen sich z.B. verschiedene Raumeinrichtungen, die unterschiedliche Kommunikationstechnologien unterstützen, an die erfindungsgemäße Vorrichtung anschließen.

Die Anschlusseinheit kann für eine leitungsgebundene Datenkommunikation ausgebildet sein. Hierfür kann die Anschlusseinheit mit einer seriellen Datenschnittstelle, z.B. RS-232 oder z.B. USB, ausgestattet sein. Vorzugsweise ist die Anschlusseinheit für eine Ethernet-Vernetzung, z.B. über einen RJ-45-Anschluss für z.B. Twisted-Pair-Leitungskabel, ausgebildet. Diese Technologie ist vorteilhaft häufig, insbesondere als Heimnetzwerk verfügbar und kostengünstig.

Eine besonders bevorzugte Ausführung besteht darin, dass die Anschlusseinheit einen Anschluss an einem Stromversorgungsnetz aufweist, der eine Datenkommunikation über ein angeschlossenes Stromversorgungsnetz ermöglicht, weil sich dadurch zwei separate Anschlüsse für Stromversorgung und Kommunikation vorteilhaft vermeiden lassen.

Des Weiteren kann die Anschlusseinheit für eine leitungslose Datenkommunikation mit z.B. WLAN oder z.B. Bluetooth ausgebildet sein. Dies bietet den Vorteil, dass nur eine geringe oder gar keine Verkabelung nötig ist.

Die Anschlusseinheit für ein Kommunikationsnetzwerk kann zugleich als Anschlusselement für die Raumeinrichtung nutzbar sein. Dadurch ist der Umfang an Anschlussmitteln verringerbar und die Vorrichtung lässt sich kompakter aufbauen. Wenn die Erfindung mit einer vom Anschlusselement getrennten Anschlusseinheit ausgestattet ist, lässt sich gegebenenfalls eine Störung der Signalübertragung zwischen der Kontrolleinheit und dem Möbel bzw. der Raumeinrichtung vorteilhaft vermeiden oder begrenzen.

Vorzugsweise weist die Kontrolleinheit wenigstens eine Kontrollfunktion für ein bewegliches Möbelteil oder ein einstellbares Raumelement auf, die durch den Empfang von einem Signal oder von mehreren Signalen über die Anschlussmittel auslösbar ist. Dadurch ist vorteilhaft eine vergleichsweise kurze Reaktionszeit und eine entsprechend zuverlässige und sichere Nutzung des Möbels und der Raumeinrichtung erreichbar. Dabei kann ein Signal zum Beispiel ein Spannungszustand oder Spannungswechsel sein. Ebenso kann ein Signal aus ein oder mehreren Bits eines mehrstelligen digitalen Werts, zum Beispiel Byte, WORD, DWORD etc. bestehen, das zum Beispiel als Datenelement in einem Datenpaket über ein digitales Kommunikationssystem übermittelt wird.

Die Kontrollfunktion für z.B. eine Schranktüre kann durch ein Signal von z.B. einem Betätigungselement auslösbar sein und zur Kontrolle einer z.B. Öffnungs- oder z.B. Schließbewegung ausgebildet sein.

Um eine schnelle Ausführung nach dem Empfang eines Signals sicher zu stellen, kann die Kontrollfunktion zum Aufruf durch z.B. eine Unterbrechungsbehandlung der Kontrolleinheit vorgesehen sein. Ergänzend hierzu ist es vorteilhaft, wenn die Kontrolleinheit und vorzugsweise auch die Anschlussmittel für eine Echtzeitverarbeitung von Signalen und Daten ausgebildet sind.

Falls mit einer Kontrolle eines beweglichen Möbelteils, insbesondere eines Bewegungsablaufs desselben ein vergleichsweise komplexer Ablauf verbunden ist, kann eine Kontrollfunktion aus mehreren untergeordneten Kontrollfunktionen aufgebaut sein, die von einer zuerst aufrufbaren Kontrollfunktion aufgerufen werden. Beispielsweise kann eine Kontrollfunktion zum Schließen einer Schublade aus einer Kontrollfunktion zur schließenden Fahrbewegung der Schublade und aus einer Kontrollfunktion zum Verriegeln der Schublade in einer geschlossenen Position zusammengesetzt sein. Dabei kann eine Kontrollfunktion derart modular aufgebaut sein, dass sie gänzlich oder teilweise konfigurierbar ist. Hierdurch ist vorteilhaft eine erhöhte Flexibilität und Nutzbarkeit der erfindungsgemäßen Vorrichtung erreichbar.

Die Kontrolleinheit kann derart ausgebildet sein, dass eine Kontrollgruppe einrichtbar ist, der sich das Möbel und/oder ein oder mehrere angeschlossene Raumeinrichtungen zuordnen lassen. Dies bietet vorteilhaft eine Möglichkeit, die Mitglieder einer Kontrollgruppe unter vorgegebenen Bedingungen wie eine Einheit zu behandeln, um z.B. deren gleichzeitige Reaktion auf ein Ereignis zu koordinieren. Insbesondere wenn Sensoren und gegebenenfalls Aktoren einer Raumeinrichtung direkt an den Anschlussmitteln angeschlossen sind, können sie in einer Kontrollgruppe konfiguriert sein, die in der Kontrolleinheit die Raumeinrichtung repräsentieren kann. In entsprechender Weise sind auch Sensoren und Aktoren des Möbels konfigurierbar. Die Konfiguration einer Kontrollgruppe lässt sich vorteilhaft dadurch vereinfachen, dass in der Kontrolleinheit eine Kontrollgruppe einer anderen Kontrollgruppe zuweisbar ist, wodurch die Mitglieder der zugewiesenen Kontrollgruppe nicht einzeln nacheinander der zu erstellenden Kontrollgruppe zugeordnet werden müssen.

Die Raumeinrichtung und das Möbel können beispielsweise gemeinsam als Kontrollgruppe einem Signal zugeordnet werden, und auf das Signal reagieren. Die Raumeinrichtung und das Möbel können durch eine Kontrollgruppe zum Beispiel einem Raum, in dem sie aufgestellt sind, zugeordnet sein. Hierdurch lässt sich gewährleisten, dass beide, das Möbel und die Raumeinrichtung, auf Signale, die diesen Raum betreffen, auf vorgesehene Weise z.B. gleichzeitig reagieren. Beispielsweise kann ein Benutzer wünschen, dass nach einem Abschalten einer elektrischen Beleuchtung in einem Raum alle beweglichen Möbelteile, die am Möbel und an der Raumeinrichtung schließbar sind, in eine jeweilige Schließposition bewegt werden.

Vorzugsweise ist einer Kontrollgruppe zumindest eine Kontrollfunktion zugeordnet, die zumindest zeitweise einen Kontrollvorgang oder Kontrollzustand zwischen mehreren Mitgliedern der Kontrollgruppe koordiniert. Dadurch lassen sich mehrere Raumeinrichtungen gegebenenfalls mit dem Möbel zum Beispiel einem Signal zuordnen.

Eine bevorzugte Ausführung der Erfindung sieht vor, dass in der Kontrolleinheit für eine Kontrollfunktion eine Auslösebedingung konfigurierbar ist, durch die ein oder mehrere Signale derart verknüpft sind, dass bei der Signalisierung der Auslösebedingung die Kontrolleinheit die Ausführung der entsprechenden Kontrollfunktion einleitet. Eine Konfigurierung kann auf z.B. einem Personal Computer mit einem dafür bereitgestellten Programm erstellbar und über eine z.B. USB- oder z.B. Ethernet-Schnittstelle der Anschlussmittel an die Kontrolleinheit übertragbar sein. Durch eine z.B. logische Verknüpfung von Signalen ist eine vergleichsweise genauere Unterscheidung mehrerer verschiedener Situationen möglich, für deren Behandlung ein oder mehrere Kontrollfunktionen bereitgestellt sind. Signalquellen von verknüpfbaren Signalen können zum Beispiel das Möbel, zum Beispiel die Raumeinrichtung und zum Beispiel Sensoren und Betätigungselemente der Umgebung sein, die über die Anschlussmittel an die erfindungsgemäße Vorrichtung angeschlossen sind.

In der Kontrolleinheit ist vorzugsweise eine Auslösebedingung einer Kontrollgruppe zuweisbar. Damit können für z.B. mehrere Raumeinrichtungen und für z.B. das Möbel, welche gemeinsam von einer bestimmten Nutzungssituation betroffen sind, jeweils die entsprechenden Kontrollfunktionen aufrufen.

Die Kontrolleinheit kann zur Kommunikation mit einer übergeordneten Kontrolleinrichtung verbindbar sein. Die übergeordnete Kontrolleinrichtung kann z.B. ein PC oder z.B. ein Gebäudemanagementsystem sein.

Die Kontrolleinheit kann dazu ausgebildet sein, bei Empfang eines vorgegebenen Signals von der übergeordneten Kontrolleinrichtung eine vorgegebene Funktion zur Kontrolle von Bewegungen des bewegbaren Möbelteils und von Einstellungen eines einstellbaren Einrichtungselements zur Raumeinrichtung auszuführen.

Vorzugsweise ist an der Kontrolleinheit eine Information zum Aufstellungsort des Möbels und/oder der Raumeinrichtung einstellbar. Dabei kann die Kontrolleinheit dazu ausgebildet sein, die Information zum Aufstellungsort bei der Ausführung einer Funktion zur Kontrolle des bewegbaren Möbelteils und des einstellbaren Einrichtungselements auszuwerten.

Die Kontrolleinheit ist derart ausgebildet, dass vorzugsweise die Kontrolleinheit durch eine übergeordnete Kontrolleinrichtung kontrollierbar ist.

Ebenso ist es bevorzugt, dass die Kontrolleinheit derart ausgebildet ist, dass mit der Kontrolleinheit untergeordnete Kontrollgeräte, die ein oder mehrere Raumeinrichtungen kontrollieren, kontrollierbar sind.

Eine bevorzugte Ausführung der Erfindung besteht darin, dass zum Antrieb des bewegbaren Möbelteils eine Antriebseinheit als Aktor vorgesehen ist, und dass die Kontrolleinheit dazu ausgebildet ist, dass eine zweite Antriebseinheit eines zweiten Möbelteils, das an einem zweiten räumlich getrennt aufstellbaren Möbel bewegbar angebracht ist, anschließbar ist, wobei mit der Kontrolleinheit eine auf das zweite Möbelteil abgestimmte Bewegungskontrolle durchführbar ist.

Die Kontrolleinheit kann dazu ausgebildet sein, dass Bewegungen von Möbelteilen verschiedener räumlich getrennt aufstellbarer Möbel entkoppelt voneinander kontrollierbar sind. Dadurch sind vorteilhaft auch weit voneinander entfernt platzierte Möbelteile ohne Einschränkung bedienbar. Zudem kann die Kontrolleinheit dazu ausgebildet sein, dass Bewegungen von Möbelteilen verschiedener räumlich getrennt aufstellbarer Möbel zumindest teilweise miteinander gekoppelt kontrollierbar sind. Somit können bewegbare Möbelteile auch an weiter voneinander entfernt, aber auch von dicht beieinander aufgestellten Möbeln aufeinander abgestimmt bedient werden. Dies bietet insbesondere den Vorteil, dass bei Signalisierung einer entsprechenden Kontrollfunktion Möbelteile, die sich aufeinander zu bewegen von einer Kollision ferngehalten werden.

An die Kontrolleinheit kann ein Sensorelement anschließbar sein. Das Sensorelement kann zum Beispiel ein Bewegungssensor, zum Beispiel eine Lichtschranke, zum Beispiel ein Helligkeitssensor, zum Beispiel ein Positionssensor für eine Zimmertüre und ein beliebiges anderes Sensorelement sein, das zum Einsatz für eine Kontrolle von Möbelteilen oder Kontrollorganen von Raumeinrichtungen geeignet ist.

Des Weiteren kann an die Kontrolleinheit ein elektrischer Schaltapparat anschließbar sein. Der elektrische Schaltapparat kann zum Beispiel ein elektrischer Wippschalter oder zum Beispiel ein Schalttaster sein, die beispielsweise zum Schalten von Beleuchtungseinrichtungen üblicherweise eingesetzt werden.

Vorzugsweise ist die Kontrolleinheit dazu ausgebildet, dass durch Bestätigen eines von der Kontrolleinheit kontrollierten bewegbaren Möbelteils mindestens ein weiteres bewegbares Möbelteil, wenn es unter Bewegungskontrolle der Kontrolleinheit steht, zeitweise gekoppelt bewegbar ist.

Dabei ist es vorteilhaft, wenn in der Kontrolleinheit für ein zur Bewegungskontrolle angeschlossenes bewegbares Möbelteil eine Bereitschaftsposition speicherbar ist.

In der Kontrolleinheit ist vorzugsweise eine Zeitspanne einstellbar, nach der ein unter Bewegungskontrolle durch die Kontrolleinheit stehendes bewegbares Möbelteil in die Bereitschaftsposition bewegt wird.

In einem Möbelteil mit einer erfindungsgemäßen Vorrichtung können ein oder mehrere vorteilhafte Merkmale der zu vorgenannten Ausführung der Erfindung bereitgestellt werden.

Nachfolgend werden Ausführungsbeispiele der Erfindung anhand von Zeichnungen erläutert, wobei gegebenenfalls weitere Vorteile aufgeführt werden.

Es zeigen:
- Figur 1: eine schematische Ansicht eines erfindungsgemäßen Möbels in einem Raum,
- Figur 2: ein schematisches Diagramm eines Kontrollablaufs,
- Figur 3: eine schematische Draufsicht einer Wohnung mit Kontrollvorrichtungen,
- Figur 4: ein schematisches Diagramm einer Kontrollhierarchie.

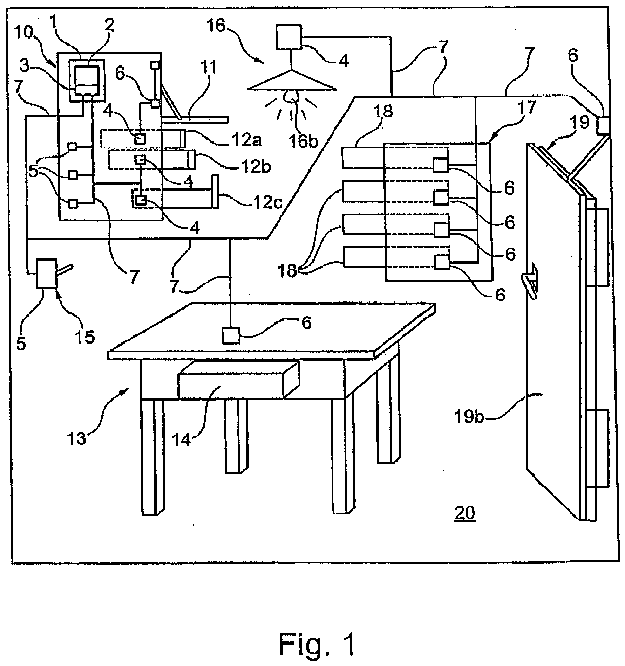

Die Figur 1 zeigt als Ausführungsbeispiel eines erfindungsgemäßen Möbels einen Schrank 10, der in einem Raum 20 aufgestellt ist. Der Schrank 10 ist mit einer erfindungsgemäßen Kontrollvorrichtung 1 ausgestattet.

In dem Raum 20 befinden sich zudem mehrere Raumeinrichtungen 13, 15, 16, 17 und 19.

Der Schrank 10 weist mehrere einstellbare Elemente in Form von beweglichen Möbelteilen 11, 12a - 12c auf. Zu oberst ist eine nach unten aufklappbare Klappe 11 angebracht. Zum Öffnen und Schließen der Klappe 11 ist diese mit einer Sensor-Aktor-Kombination 6 ausgestattet. Dies kann z.B. ein Elektroantrieb mit integriertem Winkelmesser (nicht gezeigt) sein, mit dem beispielsweise verschiedene Lagen der Klappe einstellbar und bestimmbar sind.

Unterhalb der Klappe 11 sind drei Schubladen 12a - 12c übereinander im Schrank 10 untergebracht. Der Schrank 10 weist für jede der Schubladen 12a - 12c jeweils einen Sensor 5 auf, mit dem z.B. eine Schließstellung oder z.B. mehrere verschiedene Stellungen der jeweiligen Schublade 12a - 12c erkennbar sind. Zudem ist das Möbel 10 an jeder Schublade 12a - 12c mit jeweils an einen Aktor 4 ausgestattet, mit dem sich die jeweilige Schublade 12a - 12c bewegen lässt.

Im Schrank 10 ist eine erfindungsgemäße Kontrollvorrichtung 1 untergebracht, die eine z.B. elektronische Kontrolleinheit 2 und Anschlussmittel 3 besitzt. Die Anschlussmittel 3 können ein oder mehrere Schnittstellen (nicht gezeigt) bieten, mit denen sich die Aktoren 4 und Sensoren 5 an die Kontrolleinheit anschließen lassen. Die Kontrolleinheit 2 und die Anschlussmittel 3 sind derart miteinander verbunden, dass die Kontrolleinheit 2 über die Anschlussmittel 3 Signale mit angeschlossenen Komponenten austauschen kann. Eine Verbindung 7 der Sensoren 4 und der Aktoren 5 des Möbels 10 ist in Fig.1 symbolisch dargestellt und kann mit verschiedenen bekannten Technologien, z.B. mittels Funkverbindungen oder z.B. mittels elektrischer Verbindungsleitungen, bereitgestellt werden. Zur Verbindung mit Sensoren 5 und Aktoren 4 im Möbel 10 lassen sich wegen der kurzen Übertragungswege im Möbel 10 vergleichsweise einfache Schnittstellen einsetzen, die eine geringe Reichweite und erst über größere Entfernungen, z.B. von mehr als 3 Metern, eine Störanfälligkeit aufweisen.

Für eine Funkverbindung ist z.B. eine ZigBee- oder z.B. eine Z-Wave-Schnittstelle (nicht gezeigt) einsetzbar. Eine leitungsgebundene Verbindung kann z.B. mit ein oder mehreren seriellen Schnittstellen (nicht gezeigt), insbesondere mit einer USB-Schnittstelle (USB: Universal Serial Bus) bereitgestellt werden.

Darüber hinaus umfassen die Anschlussmittel 3 ein oder mehrere Schnittstellen (nicht gezeigt), mit denen Verbindungen 7 der Kontrollvorrichtung 1 mit den Raumeinrichtungen 13, 15, 16, 17 und 19 herstellbar sind. Für diese Verbindungen können beispielsweise die gleichen Schnittstellen einsetzbar sein, die zur Verbindung der Sensoren und Aktoren 4, 5, 6 des Möbels bereitstehen. Allerdings können für die Verbindungen 7 zu den Raumeinrichtungen 13, 15, 16, 17 und 19 auch ein oder mehrere separate Schnittstellen (nicht gezeigt) vorgesehen sein, die insbesondere größere Entfernungen, z.B. von 10 bis 100 Metern, zuverlässig unterstützen. Dies bietet den Vorteil, dass damit Sensoren und Aktoren 4, 5, 6 für eine Signalübertragung verbindbar sind, die sich außerhalb des Möbels 10 und gegebenenfalls in größeren Entfernungen, z.B. an einer gegenüber liegenden Wand eines Raumes oder z.B. in einem anderen Raum eines Gebäudes, befinden. Für eine leitungsgeführte Signalübertragung ist insbesondere eine Ethernet-Schnittatelle (nicht gezeigt) wegen der großen Verbreitung der Ethernet-Technologie geeignet. Einen besonderen Vorteil bietet diese Kommunikationstechnologie dadurch, dass hierfür auch Ausführungen verfügbar sind, mit denen eine Kommunikation über ein Stromversorgungsnetz, insbesondere ein Hausstromnetz möglich ist.

Die Kontrollvorrichtung 1 ist auch zur Kontrolle von Sensoren und Aktoren 4, 5, 6 vorgesehen und ausgebildet, die sich außerhalb des Möbels 10 befinden und die eine Kontrolle von Kontrollorganen 1,4, 16b, 18, 19b von Raumeinrichtungen ermöglichen. In Figur 1 sind beispielhaft mehrere Raumeinrichtungen gezeigt:
An die Anschlussmittel 3 ist über die Verbindung 7 z.B. ein Schaltapparat 15 angeschlossen, um eine manuelle Betätigung des Schaltapparates 15 an die Kontrolleinheit 2 zu übermitteln. Dabei kann ein Sensor 5 z.B. einen Schaltzustand oder z.B. einen Wechsel zwischen Schaltzuständen signalisieren.

Als eine weitere Raumeinrichtung ist ein Tisch 13 mit der Kontrollvorrichtung 1 verbunden. Das Kontrollorgan des Tisches ist eine Schublade 14, die durch eine Sensor-Aktor-Kombination 6, die als Elektromotor mit Positionssensor ausgebildet sein kann, aus- und einfahrbar ist.

Auch eine Lampe 16, deren Kontrollorgan ein elektrisches Leuchtelement ist, steht mit der Kontrollvorrichtung 1 in Verbindung. Die Lampe 16 ist dabei über den Aktor 4, der als z.B. ein Relais ausgebildet sein kann, kontrollierbar.

Als weitere Raumeinrichtung ist ein zweiter Schrank 17 an einer beliebigen Stelle des Raumes 20 aufgestellt, der mehrere Schubladen 18 als Kontrollorgane aufweist. Die Schubladen 18 sind mit Hilfe von Sensor-Aktor-Kombinationen 6 bewegbar und an die Kontrollvorrichtung 1 angeschlossen.

Als Beispiel einer Raumeinrichtung ist eine Zimmertüre 19 gezeigt. Dabei ist das Türblatt 19b mittels einer Sensor-Aktor-Kombination 6 kontrollierbar.

Die Kontrollvorrichtung 1 geht in ihren Funktionen über bisherige Möbelsteuerungen hinaus, weil sie nicht nur zur Kontrolle von Parametern, insbesondere z.B. bewegbaren Möbelteilen 11, 12a - 12c, ausgebildet ist, sondern auch auf Raumeinrichtungen z.B. in ihrer Umgebung kontrollierend Einfluss nehmen kann. Wie die oben aufgeführten Beispiele für Raumeinrichtungen in Fig.1 erkennen lassen, lassen sich unter Verwendung der erfindungsgemäßen Kontrollvorrichtung 1 verschiedenartige Raumeinrichtungen 13, 15, 16, 17 und 19 nicht nur auf Benutzungsmöglichkeiten des Möbels 10 abstimmen. In entsprechender Weise ist auch eine Abstimmung des Möbels 10 auf verschiedene Bedingungen und Nutzungsszenarien in dessen Umgebung, z.B. im Raum 20, möglich. Dadurch lassen sich wiederkehrende Abläufe einer Benutzung z.B. unter Einschluss des Möbels 10 und ein oder mehrerer der Raumeinrichtungen 13, 15, 16, 17 und 19 automatisieren, wodurch sich vielfältige Möglichkeiten z.B. zur Unfallvermeidung, z.B. zum Energiesparen und nicht zuletzt auch z.B. zur Erhöhung des Wohnkomforts ergeben.

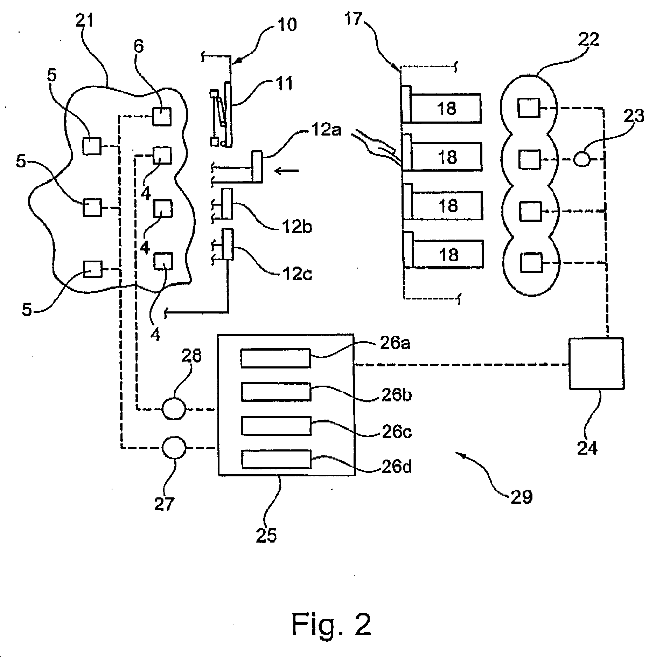

Beispielsweise können die Schränke 10 und 17 im Raum 20 derart angeordnet sein, dass das Öffnen einer der Schubladen 12a - 12c, 18 bzw. der Klappe 11 wenig Bewegungsraum zwischen den Schränken 10 und 17 belässt. Die Kontrollvorrichtung 1 kann dementsprechend dazu konfigurierbar sein, beispielsweise ein Öffnen am Schrank 10 zu blockieren, wenn der Schrank 17 bereits geöffnet ist, und umgekehrt ein Öffnen des Schranks 17 zu blockieren, wenn der Schrank 10 bereits geöffnet ist. Das Beispiel dieser Rahmenbedingung dient nachfolgend als Ausgangspunkt für ein Beispiel einer in Figur 2 ausschnittweise dargestellten Konfiguration 29 der Kontrollvorrichtung 1.

Die Sensoren und Aktoren 4, 5, 6 zum einen des Schranks 10 sowie zum anderen jene des Schranks 17 können zu zwei Kontrollgruppen konfiguriert sein: beispielsweise eine erste Kontrollgruppe 21 für den Schrank 10 und eine zweite Kontrollgruppe 22 für den Schrank 17.

Jede der Sensor-Aktor-Kombinationen 6 im Schrank 17 kann Signale 23 z.B. bei Betätigung einer der Schubladen 18 an die Kontrollvorrichtung 11 übermitteln. Beispielsweise können die Signale 23 der einzelnen Sensor-Aktor-Kombinationen 6 des Schranks 17 für eine Auslösebedingung 24 durch eine logische ODER-Verknüpfung miteinander derart gekoppelt sein, dass eine Betätigung zum Öffnen des Schranks 17 an einer der Schubladen 18 bewirkt, dass die Auslösebedingung 24 erfüllt ist.

Die Auslösebedingung 24 kann einer Kontrollfunktion 25 zugeordnet sein, die an die erste Kontrollgruppe 21 geknüpft ist. Die Kontrollfunktion 25 kann z.B. derart konfiguriert sein, dass das Öffnen einer der Schubladen 18 zum Schließen der Klappe 11 und der Schubladen 12a - 12c führt. Hierfür können mit der Kontrollfunktion 25 für die Auslösebedingung 24 z.B. Kontrollfunktionen 26a - 26d aufrufbar sein, die einzeln zur Kontrolle von Schließbewegungen jeweils einer der Schubladen 12a - 12c oder der Klappe 11 vorgesehen sind. Beispielsweise kann jede Kontrollfunktion 26a - 26d dazu ausgebildet sein, jeweils von einem Sensor 5, 6 ein oder mehrere Daten 27 zum Öffnungszustand einer Schublade 12a - 12c oder Klappe 11 abzufragen und für ein geöffnetes Möbelteil 12a - 12c, 11 ein oder mehrere Signale 28 an den entsprechenden Aktor für eine Schließbewegung zu senden.

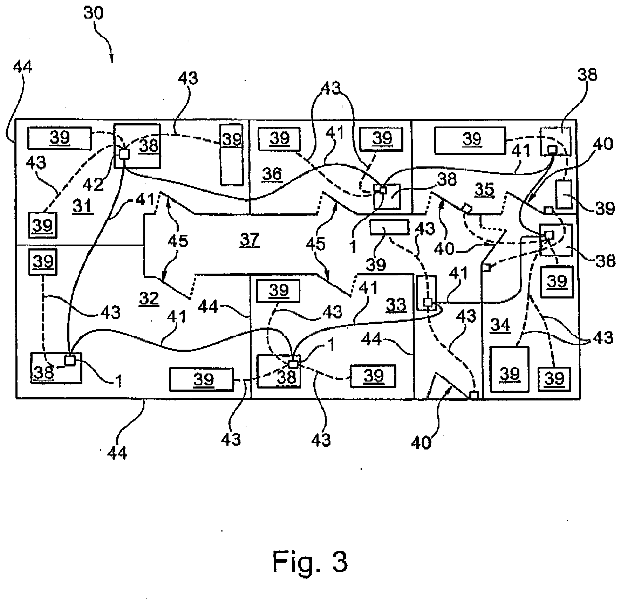

In Figur 3 ist schematisch und unmaßstäblich eine Wohnung 30 mit mehreren Zimmern 31 - 37 gezeigt, wobei sich in jedem Zimmer 31 - 37 jeweils ein erfindungsgemäßes Möbel 38 befindet. Allerdings unterscheidet sich das Möbel 38 im Zimmer 31 von jenen der übrigen Zimmer 32 - 37 dadurch, dass die Kontrollvorrichtung 42 gegenüber Kontrollvorrichtungen 1 in den Möbel 38 der übrigen Zimmer 32 - 37 übergeordnet ist.

Die Kontrollvorrichtungen 1 und 42 sind in den jeweiligen Zimmern 31 - 37 zur Kontrolle der entsprechenden Möbel 38 und mit ihnen verbundener Raumeinrichtungen 39 vorgesehen. Mehrere Verbindungen von Sensoren und Aktoren 4, 5, 6 einer Raumeinrichtung 39 können dabei symbolisch durch eine Verbindungslinie 43 dargestellt sein. Mehrere verschiedene Verbindungen 43 zwischen den Kontrollvorrichtungen 1, 42 und Raumeinrichtungen 39 können jeweils unterschiedlich ausgebildet sein, z.B. kabelgebunden und z.B. kabellos. Wenn ein Anschlusselement (nicht gezeigt) für eine Raumeinrichtung 39 hinsichtlich z.B. der Übertragungsreichweite und z.B. der Störanfälligkeit geeignet ausgebildet ist, lässt sich die Kontrollvorrichtung 1 z.B. des Zimmers 33 mit einer Raumeinrichtung 39 eines z.B. benachbarten Zimmers 32 verbinden.

Für eine übergeordnete Kontrolle sind alle Kontrollvorrichtungen 1 für eine Kommunikation mit der Kontrollvorrichtung 42 verbunden, wobei beispielsweise mehrere Verbindungen 41 z.B. abschnittsweise von einem zum nächsten Möbel 38 eingerichtet sein können. Für die Verbindungen 41 können die Kontrollvorrichtungen 1 und 42 beispielsweise eine LAN-Schnittstelle (nicht gezeigt), insbesondere eine Ethernet-Schnittstelle (nicht gezeigt) aufweisen.

Vorzugsweise ist die Kontrollvorrichtung 42 mit ein oder mehreren konfigurierbaren Betriebsfunktionen (nicht gezeigt) als übergeordnete Kontrollvorrichtung ausgestattet. Die Betriebsfunktionen für eine übergeordnete Funktionsweise können z.B. durch entsprechende Programme (nicht gezeigt) bereitgestellt sein, so dass sich übergeordnete und einfache Kontrollvorrichtungen insbesondere hinsichtlich der Kontrolleinheit (nicht gezeigt) und der Anschlussmittel (nicht gezeigt) nicht unterscheiden.

Die übergeordnete Kontrollvorrichtung 42 kann allerdings auch hardwaremäßige Ergänzungen (nicht gezeigt) gegenüber den Kontrollvorrichtungen 1 aufweisen, die beispielsweise nur einer autorisierten Person einen Zugriff auf eine Konfiguration bzw. einen Konfigurationsmodus der Kontrollvorrichtung 42 und gegebenenfalls auf Konfigurationen der mit ihr verbundenen Kontrollvorrichtungen 1 ermöglichen.

Die Betriebsfunktionen einer übergeordneten Kontrollvorrichtung können zur Erfüllung unterschiedlicher Aufgaben ausgebildet sein. Ein oder mehrere Betriebsfunktionen können beispielsweise dazu ausgebildet sein, Signale, Daten und Informationen gezielt, insbesondere konfigurierbar, zwischen mehreren Kontrollvorrichtungen auszutauschen, wodurch sie in z.B. in verschiedenen Zimmern 31 - 37 zur Kontrolle der Möbel 38 und Raumeinrichtungen 39 zur Verfügung stehen.

Beispielsweise kann mit der Kontrollvorrichtung 42 konfigurierbar sein, dass mit einer vorgegebenen Betätigung an einem Möbel 38 z.B. im Zimmer 34 ein Signal erzeugbar ist, das zur Übermittlung über die Kontrollvorrichtung 42 an ein oder mehrere vorgegebene Kontrollgruppen in Kontrollvorrichtungen 1 in anderen Zimmern, z.B. Zimmer 32 und 33, zu übermitteln ist. Dies bietet den Vorteil, dass eine Kontrolle zur Koordination von z.B. mehreren Möbeln 38 bzw. Raumeinrichtungen 39 über eine größere Distanz, z.B. einer maximalen Segmentlänge eines Kommunikationsnetzes, möglich ist. Dadurch sind Möbel 38 und Raumeinrichtungen 39 beispielsweise in verschiedenen Zimmern 31 - 37 einer Wohnung 30 koordiniert kontrollierbar.

Insbesondere lassen sich damit vorteilhaft nichtlokale Kontrollfunktionen und Betriebsweisen bereitstellen. Vorzugsweise ist die übergeordnete Kontrollvorrichtung 42 dazu ausgebildet, einen Energiesparmodus einzustellen. Hierfür kann die übergeordnete Kontrollvorrichtung 42 derart ausgebildet sein, dass sie über die Verbindungen 41 eine Nachricht an eine oder an mehrere und insbesondere an alle Kontrollvorrichtungen 1 versendet, die dadurch in deren jeweiligen Energiesparmodus versetzbar sind. Die Kontrollvorrichtungen 1 und 42 können beispielsweise mit einer Uhr (nicht gezeigt) bzw. mit einem Zeitgeber (nicht gezeigt) ausgestattet sein. Der Energiesparmodus kann mittels z.B. des Zeitgebers z.B. als eine Funktion der Kontrollvorrichtung 1 bzw. 42 ausgebildet sein, die nach Ablauf einer vorgebbaren Wartezeit, während der keine Betätigung eines der Möbel 38 oder einer der Raumeinrichtungen 39 signalisiert worden ist, eine z.B. Versorgungsspannung für Sensoren und Aktoren 4, 5, 6 herabsetzt oder völlig abschaltet.

Die übergeordnete Kontrollvorrichtung 42 kann durch Kommunikation über die Verbindungen 41 auch weitere Ereignisse, die mehrere oder alle Zimmer 31 - 37 einer Wohnung betreffen, an die Kontrollvorrichtungen 1 signalisieren.

Solche weiteren Ereignisse können z.B. eine Stromabschaltung, z.B. ein Stromausfall, z.B. ein Erreichen einer vorgegebenen Intensität der Sonneneinstrahlung, z.B. ein Erreichen einer vorgegebenen Windstärke und z.B. Regen oder Hagel sein.

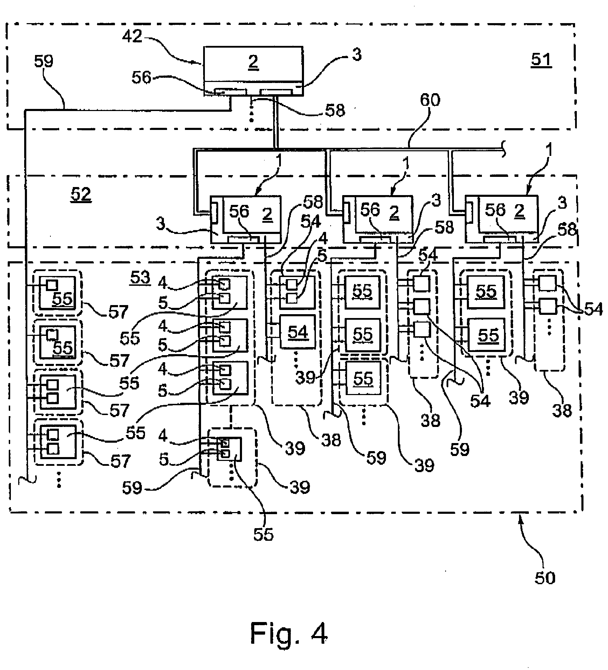

Die Figur 4 zeigt schematisch in Form eines Diagramms eine Kontrollhierarchie 50, die mit erfindungsgemäßen Kontrollvorrichtungen 1 und 42 in verschiedenen Ausführungen bzw. Einstellungen realisierbar ist. Die Kontrollhierarchie 50 ist in verschiedene Ebenen 51, 52 und 53 eingeteilt. Eine übergeordnete Ebene 51 ist zur Bearbeitung von Aufgaben, Ereignissen und Bedingungen vorgesehen, die mehrere Bereiche, insbesondere Räume (nicht gezeigt) eines Gebäudes (nicht gezeigt) oder ein ganzes Gebäude betreffen.

Eine tiefere, lokale Ebene 52 ist zur Behandlung von Ereignissen und Bedingungen vorgesehen, die sich auf einen einzelnen vorgegebenen Bereich, insbesondere eines Raumes in einem Gebäude beziehen. In einem solchen Bereich befindet sich jeweils ein erfindungsgemäßes Möbel 38 und mindestens eine Raumeinrichtung 39.

Einer untersten Ebene 53 sind Bereiche, insbesondere von Möbeln 38 und von Raumeinrichtungen 39, zugeordnet, in denen Ereignisse und Bedingungen durch Sensoren 5 unmittelbar erfassbar und durch Aktoren 4 unmittelbar beeinflussbar sind. Meist sind in dieser Ebene eingesetzte Verbindungen 56, 58 sowie die Sensoren und Aktoren 4, 5, 6 nur für eine Kommunikation bzw. Signalübermittlung an eine höhere Verarbeitungseinheit vorgesehen. Des weiteren sind die für Signalübermittlungen vorgesehenen Verbindungen 56 und 58 für eine Kommunikation, bei der Sensoren und Aktoren 4, 5, 6 unmittelbar miteinander Signale oder Daten austauschen, nur wenig oder gar nicht geeignet.

Eine Kontrolleinheit 2 und Anschlussmittel 3 einer erfindungsgemäßen Kontrollvorrichtung 1 bzw. 42 ist immer dazu ausgebildet, Anschlüsse und Funktionen bereitzustellen, mit denen zumindest ein Parameter 54 eines Möbels 38 und zumindest eines Kontrollorgans 55 einer Raumeinrichtung kontrollierbar sind. Durch eine zentrale Verarbeitung von Signalen der Sensoren und Aktoren 4, 5, 6 benötigen diese kaum oder keine eigene Verarbeitungsfähigkeiten und können dementsprechend einfacher und kostengünstiger herstellbar sein. Vorzugsweise weist die Kontrollvorrichtung 1, 42 für jeden Parameter 54 und für jedes Kontrollorgan 55 jeweils ein oder mehrere Funktionen (nicht gezeigt), insbesondere Kontrollfunktionen (nicht gezeigt) auf, mit denen entweder der jeweilige Parameter 54 oder das jeweilige Kontrollorgan 55 unabhängig von weiteren angeschlossenen Parametern 54 und Kontrollorganen 55 kontrollierbar ist. Dadurch kann eine Funktionalität eines Parameters 54 oder Kontrollorgans 55 vollständig verfügbar sein, wenn ein Möbel 38 oder eine Raumeinrichtung 39 frei von Beschränkungen angeordnet ist. Die Kontrollvorrichtung kann vorzugsweise ein oder mehrere Funktionen, insbesondere Kontrollfunktionen aufweisen, mit denen einer der Parameter 54 in Abhängigkeit des Zustands von ein oder mehreren Kontrollorganen kontrollierbar ist.

### Bezugszeichenliste:

- 1: Kontrollvorrichtung
- 2: Kontrolleinheit
- 3: Anschlussmittel
- 4: Aktor
- 5: Sensor
- 6: Sensor-Aktor-Kombination
- 7: Verbindung
- 10: Schrank
- 11: Klappe
- 12a: Schublade
- 12b: Schublade
- 12c: Schublade
- 13: Tisch
- 14: Tischschublade
- 15: Lichtschalter
- 16: Lampe
- 16b: Leuchtmittel
- 17: Schrank
- 18: Schublade
- 19: Zimmertüre
- 19b: Türblatt
- 20: Zimmer
- 21: Kontrollgruppe
- 22: Kontrollgruppe
- 23: Signale
- 24: Auslösebedingung
- 25: Kontrollfunktion
- 26a: Kontrollfunktion
- 26b: Kontrollfunktion
- 26c: Kontrollfunktion
- 26d: Kontrollfunktion
- 27: Daten
- 28: Signale
- 29: Konfiguration
- 30: Wohnung
- 31: Zimmer
- 32: Zimmer
- 33: Zimmer
- 34: Zimmer
- 35: Zimmer
- 36: Zimmer
- 37: Zimmer
- 38: Möbel
- 39: Raumeinrichtung
- 40: Raumeinrichtung
- 41: Verbindung
- 42: Übergeordnete Kontrollvorrichtung
- 43: Verbindung
- 44: Wand
- 45: Türe
- 50: Kontrollhierarchie
- 51: Übergeordnete Ebene
- 52: Lokale Ebene
- 53: Sensor-Aktor-Ebene
- 54: Parameter
- 55: Kontrollorgan
- 56: Anschlusselement
- 57: Hauseinrichtung
- 58: Verbindung
- 59: Verbindung
- 60: Verbindung

## Patentansprüche

1. Vorrichtung (1, 42) zur Kontrolle eines Möbels (10, 38), mit einer Kontrolleinheit (2) und mit Anschlussmitteln (3), mit denen Aktoren (4, 6) und Sensoren (5, 6) für eine Signalübertragung an die Kontrolleinheit (2) anschließbar sind, um zumindest einen Parameter des Möbels (10, 38) zu kontrollieren, **dadurch gekennzeichnet, dass** die Anschlussmittel (3) ein Anschlusselement (56) umfassen, mit dem ein weiteres Möbel (13, 17) mit einem weiteren bewegbaren Möbelteil (14, 18), welches sich unabhängig und beliebig entfernt vom Möbel (10, 38) anordnen lässt, für eine Signalübermittlung anschließbar ist, und dass die Kontrolleinheit (2) eine Kontrollfunktion (25, 26a, 26b, 26c, 26d) aufweist, mit der ein Kontrollorgan (14, 16b, 18, 19b, 55) des weiteren Möbels (13, 17) kontrollierbar ist, wobei das Möbel (10, 38) und das weitere Möbel (13, 17) unabhängig voneinander kontrollierbar sind.

2. Vorrichtung (1,42) nach Anspruch 1, **dadurch gekennzeichnet, dass** die Kontrolleinheit (2) in der Lage ist, die Aktoren (4, 6) und Sensoren (5, 6) für eine Bewegungskontrolle eines bewegbaren Möbelteils (11, 12a, 12b, 12c) des Möbels (10, 38) zu kontrollieren.

3. Vorrichtung (1,42) nach einem der vorgenannten Ansprüche, **dadurch gekennzeichnet, dass** an die Anschlussmittel (3), insbesondere an das Anschlusselement (56), ein oder mehrere Aktoren (4, 6) und Sensoren (5, 6) von einem weiteren Möbel oder mehreren weiteren Möbeln anschließbar sind.

4. Vorrichtung (1,42) nach einem der vorgenannten Ansprüche, **dadurch gekennzeichnet, dass** die Kontrolleinheit (2) wenigstens eine Kontrollfunktion (25, 26a, 26b, 26c, 26d) für einen der Parameter des Möbels (10, 38) und das Kontrollorgan (14, 16b, 18, 19b, 55) aufweist, die durch den Empfang von einem oder mehreren Signalen (23) über die Anschlussmittel (3) auslösbar ist.

5. Vorrichtung (1,42) nach einem der vorgenannten Ansprüche, **dadurch gekennzeichnet, dass** die Kontrolleinheit (2) derart ausgebildet ist, dass eine Kontrollgruppe (21, 22) konfigurierbar ist, der sich Sensoren (5, 6) und Aktoren (4, 6) des Parameters und des Kontrollorgans (14, 16b, 18, 19b, 55) zuordnen lassen.

6. Vorrichtung (1,42) nach einem der vorgenannten Ansprüche, **dadurch gekennzeichnet, dass** die Kontrolleinheit (2) derart ausgebildet ist, dass eine Zuordnung zwischen der Kontrollgruppe (21, 22) und zumindest einer Kontrollfunktion (25, 26a, 26b, 26c, 26d) konfigurierbar ist, die zumindest zeitweise einen Kontrollvorgang oder -zustand zwischen mehreren Mitgliedern der Kontrollgruppe (21, 22) koordiniert.

7. Vorrichtung (1,42) nach einem der vorgenannten Ansprüche, **dadurch gekennzeichnet, dass** in der Kontrolleinheit (2) für eine Kontrollfunktion (25, 26a, 26b, 26c, 26d) eine Auslösebedingung (24) konfigurierbar ist, durch die ein oder mehrere Signale (23) derart verknüpfbar sind, dass bei deren Signalisierung die Kontrolleinheit (2) die Ausführung der entsprechenden Kontrollfunktion (25, 26a, 26b, 26c, 26d) einleitet.

8. Vorrichtung (1,42) nach einem der vorgenannten Ansprüche, **dadurch gekennzeichnet, dass** in der Kontrolleinheit (2) einer Kontrollgruppe (21, 22) eine Auslösebedingung (24) zuweisbar ist.

9. Vorrichtung (1,42) nach einem der vorgenannten Ansprüche, **dadurch gekennzeichnet, dass** die Anschlussmittel (3) eine Anschlusseinheit umfassen, mit der die Vorrichtung (1, 42) zur Kommunikation mit einer Kontrolleinrichtung (1, 42) über ein Kommunikationsnetz (41, 60) verbindbar ist.

10. Vorrichtung (1,42) nach Anspruch 9, **dadurch gekennzeichnet, dass** die Anschlusseinheit für eine leitungsgebundene Datenkommunikation ausgebildet ist.

11. Vorrichtung (1,42) nach einem der Ansprüche 9 oder 10, **dadurch gekennzeichnet, dass** die Anschlusseinheit für eine leitungslose Datenkommunikation ausgebildet ist.

12. Vorrichtung (1,42) nach einem der Ansprüche 9 bis 11, **dadurch gekennzeichnet, dass** die Anschlusseinheit einen Anschluss an ein Stromversorgungsnetz aufweist, der eine Datenkommunikation über ein angeschlossenes Stromversorgungsnetz ermöglicht.

13. Vorrichtung (1,42) nach einem der vorgenannten Ansprüche, **dadurch gekennzeichnet, dass** die Kontrolleinheit dazu ausgebildet ist, beim Empfang eines vorgegebenen Signals von einer übergeordneten Kontrolleinrichtung eine vorgegebene Funktion zur Kontrolle des Parameters und des Kontrollorgans (14, 16b, 18, 19b, 55) auszuführen.

14. Vorrichtung (1,42) nach einem der vorgenannten Ansprüche, **dadurch gekennzeichnet, dass** in der Kontrolleinheit (2) eine Information zum Aufstellungsort des Möbels konfigurierbar ist, wobei die Kontrolleinheit (2) die Information zum Aufstellungsort bei einer Ausführung einer Funktion zur Kontrolle des Parameters und des Kontrollorgans (14, 16b, 18, 19b, 55) auswertet.

15. Vorrichtung (1,42) nach einem der vorgenannten Ansprüche, **dadurch gekennzeichnet, dass** die Vorrichtung (1) durch eine übergeordnete Kontrolleinrichtung (42) kontrollierbar ist.

16. Vorrichtung (1,42) nach einem der vorgenannten Ansprüche, **dadurch gekennzeichnet, dass** die Vorrichtung (42) derart ausgebildet ist, dass mit der Vorrichtung (42) eine untergeordnete Kontrolleinrichtung (1) kontrollierbar ist.

17. Vorrichtung (1,42) nach einem der vorgenannten Ansprüche, **dadurch gekennzeichnet, dass** zum Antrieb des bewegbaren Möbelteils (11, 12a, 12b, 12c) eine Antriebseinheit als Aktor (4, 6) vorgesehen ist, und dass die Kontrolleinheit (2) dazu ausgebildet ist, dass eine weitere Antriebseinheit eines weiteren Möbelteils (14, 18), das an einem weiteren räumlich getrennt aufstellbaren Möbel (13, 17) bewegbar angebracht ist, anschließbar ist, wobei mit der Kontrolleinheit (2) eine auf beide bewegbaren Möbelteile (11, 12a, 12b, 12c, 14, 18) abgestimmte Bewegungskontrolle durchführbar ist.

18. Vorrichtung (1,42) nach Anspruch 13, **dadurch gekennzeichnet, dass** die Kontrolleinheit dazu ausgebildet ist, dass Bewegungen von Möbelteilen (11, 12a, 12b, 12c, 14, 18) verschiedener räumlich getrennt aufstellbarer Möbel (10, 13, 17, 38) entkoppelt voneinander kontrollierbar sind.

19. Vorrichtung (1,42) nach einem der Ansprüche 13 oder 14, **dadurch gekennzeichnet, dass** die Kontrolleinheit (2) dazu ausgebildet ist, dass Bewegungen von Möbelteilen (11, 12a, 12b, 12c, 14, 18) verschiedener räumlich getrennt aufstellbarer Möbel (10, 13, 17, 38) zumindest teilweise miteinander gekoppelt kontrollierbar sind.

20. Vorrichtung (1,42) nach einem der vorgenannten Ansprüche, **dadurch gekennzeichnet, dass** die Kontrolleinheit (2) dazu ausgebildet ist, dass durch Betätigen eines von der Kontrolleinheit (2) kontrollierten bewegbaren Möbelteils (11, 12a, 12b, 12c, 14, 18) mindestens ein weiteres bewegbares Möbelteil (11, 12a, 12b, 12c, 14, 18), das unter Bewegungskontrolle der Kontrolleinheit steht, zeitweise gekoppelt bewegbar ist.

21. Vorrichtung (1,42) nach einem der vorgenannten Ansprüche, **dadurch gekennzeichnet, dass** in der Kontrolleinheit (2) für ein zur Bewegungskontrolle angeschlossenes bewegbares Möbelteil (11, 12a, 12b, 12c, 14, 18) eine Bereitschaftsposition speicherbar ist.

22. Vorrichtung (1,42) nach einem der vorgenannten Ansprüche, **dadurch gekennzeichnet, dass** in der Kontrolleinheit (2) eine Zeitspanne einstellbar ist, nach der ein unter Bewegungskontrolle durch die Kontrolleinheit (2) stehendes Möbelteil (11, 12a, 12b, 12c, 14, 18) in die Bereitschaftsposition bewegt wird.

23. Möbel (10, 38) mit einer Vorrichtung (1,42) nach einem der vorgenannten Ansprüche.

## Claims

1. Device (1, 42) for controlling an item of furniture (10, 38), with a control unit (2) and with connecting means (3), to which actuators (4, 6) and sensors (5, 6) can be connected for transmitting a signal to the control unit (2), in order to control at least one parameter of the item of furniture (10, 38), **characterised in that** the connecting means (3) comprise a connecting element (56), to which an additional item of furniture (13, 17) with an additional movable furniture part (14, 18), which can be arranged independently at any distance from the item of furniture (10, 38), can be connected for transmitting a signal, and **in that** the control unit (2) has a control function (25, 26a, 26b, 26c, 26d), by which a control member (14, 16b, 18, 19b, 55) of the additional item of furniture (13, 17) can be controlled, wherein the item of furniture (10, 38) and the additional item of furniture (13, 17) can be controlled independently of one another.

2. Device (1, 42) according to claim 1, **characterised in that** the control unit (2) is able to control the actuators (4, 6) and sensors (5, 6) for a movement control of a movable furniture part (11, 12a, 12b, 12c) of the item of furniture (10, 38).

3. Device (1, 42) according to any of the preceding claims, **characterised in that** one or more actuators (4, 6) and sensors (5, 6) of an additional item of furniture or several additional items of furniture can be connected to the connecting means (3), in particular to the connecting element (56).

4. Device (1, 42) according to any of the preceding claims, **characterised in that** the control unit (2) has at least one control function (25, 26a, 26b, 26c, 26d) for one of the parameters of the item of furniture (10, 38) and the control member (14, 16b, 18, 19b, 55), which can be triggered by receiving one or more signals (23) via the connecting means (3).

5. Device (1, 42) according to any of the preceding claims, **characterised in that** the control unit (2) is designed such that a control group (21, 22) can be configured, which can be assigned sensors (5, 6) and actuators (4, 6) of the parameter and the control member (14, 16b, 18, 19b, 55).

6. Device (1, 42) according to any of the preceding claims, **characterised in that** the control unit (2) is designed such that an assignment between the control group (21, 22) and at least one control function (25, 26a, 26b, 26c, 26d) can be configured, which coordinates at least at times a control process or state between a plurality of members of the control group (21, 22).

7. Device (1, 42) according to any of the preceding claims, **characterised in that** in the control unit (2) a trigger condition (24) can be configured for a control function (25, 26a, 26b, 26c, 26d), by means of which one or more signals (23) can be linked together such that with their signal the control unit (2) initiates the execution of the corresponding control function (25, 26a, 26b, 26c, 26d).

8. Device (1, 42) according to any of the preceding claims, **characterised in that** a trigger condition (24) can be assigned in the control unit (2) of a control group (21, 22).

9. Device (1, 42) according to any of the preceding claims, **characterised in that** the connecting means (3) comprise a connecting unit, by means of which the device (1, 42) for communicating with a control device (1, 42) can be connected via a communications network (41, 60).

10. Device (1, 42) according to claim 9, **characterised in that** the connecting unit is designed for wired data communication.

11. Device (1, 42) according to any of claims 9 or 10, **characterised in that** the connecting unit is designed for wireless data communication.

12. Device (1, 42) according to any of claims 9 to 11, **characterised in that** the connecting unit has a connection to a power grid, which enables data communication via a connected power grid.

13. Device (1, 42) according to any of the preceding claims, **characterised in that** the control unit is designed on receiving a prespecified signal from a superordinate control device to execute a prespecified function for controlling the parameter and the control member (14, 16b, 18, 19b, 55).

14. Device (1, 42) according to any of the preceding claims, **characterised in that** in the control unit (2) information relating to the installation position of the item of furniture can be configured, wherein the control unit (2) evaluates the information on the installation position when executing a function for controlling the parameter and the control member (14, 16b, 18, 19b, 55).

15. Device (1, 42) according to any of the preceding claims, **characterised in that** the device (1) can be controlled by a superordinate control device (42).

16. Device (1, 42) according to any of the preceding claims, **characterised in that** the device (42) is designed such that a subordinate control device (1) can be controlled by the device (42).

17. Device (1, 42) according to any of the preceding claims, **characterised in that** for driving the movable furniture part (11, 12a, 12b, 12c) a drive unit is provided as an actuator (4, 6), and **in that** the control unit (2) is designed such that an additional drive unit of an additional furniture part (14, 18), which is movably attached onto an additional item of furniture (13, 17) which can be positioned spatially separately, wherein by means of the control unit (2) a movement control can be performed that is coordinated to both movable furniture parts (11, 12a, 12b, 12c, 14, 18).

18. Device (1, 42) according to claim 13, **characterised in that** the control unit is designed such that movements of furniture parts (11, 12a, 12b, 12c, 14, 18) of different items of furniture (10, 13, 17, 38) which can be positioned spatially separately can be controlled in a manner where they are uncoupled from one another.

19. Device (1, 42) according to any of claims 13 or 14, **characterised in that** the control unit (2) is designed such that movements of furniture parts (11, 12a, 12b, 12c, 14, 18) of different items of furniture (10, 13, 17, 38) which can be positioned spatially separately can be controlled in manner where they are at least partly coupled to one another.

20. Device (1, 42) according to any of the preceding claims, **characterised in that** the control unit (2) is designed such that by activating a movable furniture part (11, 12a, 12b, 12c, 14, 18) controlled by the control unit (2) at least one additional movable furniture part (11, 12a, 12b, 12c, 14, 18), whose movement is controlled by the control unit, can be at times moved in a coupled manner.

21. Device (1, 42) according to any of the preceding claims, **characterised in that** in the control unit (2) a standby position can be saved for a connected movable furniture part (11, 12a, 12b, 12c, 14, 18) for movement control.

22. Device (1, 42) according to any of the preceding claims, **characterised in that** in the control unit (2) a time period can be set, following which a furniture part (11, 12a, 12b, 12c, 14, 18), whose movement is controlled by the control unit (2), is moved into the standby position.

23. Item of furniture (10, 38) with a device (1, 42) according to any of the preceding claims.

## Revendications

1. Dispositif (1, 42) pour contrôler un meuble (10, 38), comprenant une unité de contrôle (2) et des moyens de connexion (3) à l'aide desquels des actionneurs (4, 6) et des capteurs (5, 6) peuvent être connectés à l'unité de contrôle (2) pour une transmission de signaux afin de contrôler au moins un paramètre du meuble (10, 38), **caractérisé en ce que** les moyens de connexion (3) comprennent un élément de connexion (56) avec lequel peut être connecté pour une transmission de signaux un autre meuble (13, 17) muni d'une autre partie de meuble (14, 18) mobile, lequel peut être disposé indépendamment du meuble (10, 38) et à n'importe quelle distance de celui-ci, et **en ce que** l'unité de contrôle (2) présente une fonction de contrôle (25, 26a, 26b, 26c, 26d) à l'aide de laquelle un organe de contrôle (14, 16b, 18, 19b, 55) de l'autre meuble (13, 17) peut être contrôlé, le meuble (10, 38) et l'autre meuble (13, 17) étant contrôlables indépendamment l'un de l'autre.

2. Dispositif (1, 42) selon la revendication 1, **caractérisé en ce que** l'unité de contrôle (2) est en mesure de contrôler les actionneurs (4, 6) et les capteurs (5, 6) pour un contrôle du mouvement d'une partie de meuble (11, 12a, 12b, 12c) mobile du meuble (10, 38).

3. Dispositif (1, 42) selon l'une des revendications précédentes, **caractérisé en ce qu'**un ou plusieurs actionneurs (4, 6) et capteurs (5, 6) d'un autre meuble ou de plusieurs autres meubles peuvent être connectés aux moyens de connexion (3), en particulier à l'élément de connexion (56).

4. Dispositif (1, 42) selon l'une des revendications précédentes, **caractérisé en ce que** l'unité de contrôle (2) présente au moins une fonction de contrôle (25, 26a, 26b, 26c, 26d) pour un des paramètres du meuble (10, 38) et l'organe de contrôle (14, 16b, 18, 19b, 55), laquelle peut être déclenchée par la réception d'un ou plusieurs signaux (23) via les moyens de connexion (3).

5. Dispositif (1, 42) selon l'une des revendications précédentes, **caractérisé en ce que** l'unité de contrôle (2) est conçue de telle sorte qu'il est possible de configurer un groupe de contrôle (21, 22) auquel peuvent être affectés des capteurs (5, 6) et des actionneurs (4, 6) du paramètre et de l'organe de contrôle (14, 16b, 18, 19b, 55).

6. Dispositif (1, 42) selon l'une des revendications précédentes, **caractérisé en ce que** l'unité de contrôle (2) est conçue de telle sorte qu'il est possible de configurer une affectation entre le groupe de contrôle (21, 22) et au moins une fonction de contrôle (25, 26a, 26b, 26c, 26d) qui coordonne au moins temporairement une opération ou un état de contrôle entre plusieurs membres du groupe de contrôle (21, 22).

7. Dispositif (1, 42) selon l'une des revendications précédentes, **caractérisé en ce qu'**il est possible de configurer dans l'unité de contrôle (2) une condition de déclenchement (24) pour une fonction de contrôle (25, 26a, 26b, 26c, 26d) au moyen de laquelle un ou plusieurs signaux (23) peuvent être associés de telle manière que, lors de leur signalisation, l'unité de contrôle (2) lance l'exécution de la fonction de contrôle correspondante (25, 26a, 26b, 26c, 26d).

8. Dispositif (1, 42) selon l'une des revendications précédentes, **caractérisé en ce qu'**une condition de déclenchement (24) peut être assignée à un groupe de contrôle (21, 22) dans l'unité de contrôle (2).

9. Dispositif (1, 42) selon l'une des revendications précédentes, **caractérisé en ce que** les moyens de connexion (3) comprennent une unité de connexion avec laquelle le dispositif (1, 42) peut être connecté à un dispositif de contrôle (1, 42) pour communiquer via un réseau de communication (41, 60).

10. Dispositif (1, 42) selon la revendication 9, **caractérisé en ce que** l'unité de connexion est conçue pour une communication de données par câbles.

11. Dispositif (1, 42) selon l'une des revendications 9 ou 10, **caractérisé en ce que** l'unité de connexion est conçue pour la communication de données sans fil.

12. Dispositif (1, 42) selon l'une des revendications 9 à 11, **caractérisé en ce que** l'unité de connexion est munie d'une connexion à un réseau d'alimentation électrique qui permet la communication de données via un réseau d'alimentation électrique connecté.

13. Dispositif (1, 42) selon l'une des revendications précédentes, **caractérisé en ce que** l'unité de contrôle est conçue pour exécuter une fonction prédéterminée pour contrôler le paramètre et l'organe de contrôle (14, 16b, 18, 19b, 55) lorsqu'un signal prédéterminé est reçu d'un dispositif de contrôle supérieur.

14. Dispositif (1, 42) selon l'une des revendications précédentes, **caractérisé en ce qu'**une information concernant l'emplacement du meuble peut être configurée dans l'unité de contrôle (2), l'unité de contrôle (2) évaluant l'information concernant l'emplacement lorsqu'une fonction pour contrôler le paramètre et l'élément de contrôle (14, 16b, 18, 19b, 55) est exécutée.

15. Dispositif (1, 42) selon l'une des revendications précédentes, **caractérisé en ce que** le dispositif (1) peut être contrôlé par un dispositif de contrôle supérieur (42).

16. Dispositif (1, 42) selon l'une des revendications précédentes, **caractérisé en ce que** le dispositif (42) est conçu de telle sorte qu'il est possible de contrôler un dispositif de contrôle subordonné (1) avec le dispositif (42).

17. Dispositif (1, 42) selon l'une des revendications précédentes, **caractérisé en ce que** pour entraîner la partie de meuble mobile (11, 12a, 12b, 12c), il est prévu une unité d'entraînement en tant qu'actionneur (4, 6), et **en ce que** l'unité de contrôle (2) est conçue pour pouvoir connecter une autre unité d'entraînement d'une autre partie de meuble (14, 18) qui est montée mobile sur un autre meuble (13, 17) placé séparément dans l'espace, un contrôle du déplacement coordonné des deux parties de meuble mobiles (11, 12a, 12b, 12c, 14, 18) pouvant être réalisé avec l'unité de contrôle (2).

18. Dispositif (1, 42) selon la revendication 13, **caractérisé en ce que** l'unité de contrôle est conçue pour pouvoir contrôler de manière découplée les uns des autres des mouvements de parties de meuble (11, 12a, 12b, 12c, 14, 18) de différents meubles (10, 13, 17, 38) qui peuvent être disposés séparément dans l'espace.

19. Dispositif (1, 42) selon l'une des revendications 13 ou 14, **caractérisé en ce que** l'unité de contrôle (2) est conçue pour pouvoir contrôler de manière au moins partiellement couplée entre eux des mouvements de parties de meuble (11, 12a, 12b, 12c, 14, 18) de différents meubles (10, 13, 17, 38) qui peuvent être disposés séparément dans l'espace.

20. Dispositif (1, 42) selon l'une des revendications précédentes, **caractérisé en ce que** l'unité de contrôle (2) est conçue de telle sorte qu'en actionnant une partie de meuble (11, 12a, 12b, 12c, 14, 18) mobile contrôlée par l'unité de contrôle (1), au moins une autre partie de meuble (11, 12a, 12b, 12c, 14, 18) mobile, qui est sous le contrôle du mouvement de l'unité de contrôle, peut être déplacée de manière temporairement couplée.

21. Dispositif (1, 42) selon l'une des revendications précédentes, **caractérisé en ce qu'**une position de veille peut être mémorisée dans l'unité de contrôle (2) pour une partie de meuble (11, 12a, 12b, 12c, 14, 18) mobile connectée pour le contrôle du déplacement.

22. Dispositif (1, 42) selon l'une des revendications précédentes, **caractérisé en ce qu'**un intervalle de temps peut être réglé dans l'unité de contrôle (2), après lequel une partie de meuble (11, 12a, 12b, 12c, 14, 18) qui est sous le contrôle du mouvement de l'unité de contrôle (2) est amenée en position de veille.

23. Meubles (10, 38) avec un dispositif (1, 42) selon l'une des revendications précédentes.
